**Europäisches Patentamt**

**European Patent Office**

**Office européen des brevets**

(11) Veröffentlichungsnummer: **0 168 663**
**B1**

(12) **EUROPÄISCHE PATENTSCHRIFT**

(45) Veröffentlichungstag der Patentschrift:
**08.11.89**

(51) Int. Cl.⁴: **F 16 C 33/20**

(21) Anmeldenummer: **85107576.2**

(22) Anmeldetag: **19.06.85**

(54) Kunststoffgleitlager.

(30) Priorität: **19.06.84 DE 8418450 U**

(43) Veröffentlichungstag der Anmeldung:
**22.01.86 Patentblatt 86/4**

(45) Bekanntmachung des Hinweises auf die Patenterteilung:
**08.11.89 Patentblatt 89/45**

(84) Benannte Vertragsstaaten:
**DE FR GB IT**

(56) Entgegenhaltungen:
**FR-A- 2 371 600**
**GB-A- 970 392**
**GB-A- 1 185 718**
**US-A- 3 076 683**
**US-A- 3 300 259**

(73) Patentinhaber: **Fritz Himmermann GmbH & Co. KG,
Trierer Strasse 57-59, D-5374 Hellenthal (DE)**

(72) Erfinder: **Rosenthal, Dieter, Erzgarten 12,
D-5372 Schleiden-Oberhausen (DE)**
Erfinder: **Fitz, Karl-Heinz, Talstrasse 3,
D-5372 Schleiden-Oberhausen (DE)**

(74) Vertreter: **Freischem, Werner, Dipl.-Ing., Patentanwälte
Dipl.-Ing. W. Freischem Dipl.-Ing. I. Freischem An Gross
St. Martin 2, D-5000 Köln 1 (DE)**

ACTORUM AG

## Beschreibung

Die Erfindung bezieht sich auf ein Kunststoffgleitlager, das als Einheit in einen hohlzylindrischen Lagerträger einsetzbar und dort fixierbar ist und aus einem äußeren Ringteil und einem in den äußeren Ringteil koaxial eingesetzten inneren Lagerteil zusammengesetzt ist und der äußere Ring und der innere Lagerteil über federnde Rasten miteinander verriegelt sind.

Ein Kunststoffgleitlager dieser Art ist bekannt aus der FR-A-2 371 600.

Bei diesem Lager besteht der innere Lagerteil aus Gummi oder Kautschuk und hat an seiner inneren, gewellten Lagerfläche eine Beschichtung aus einem Kunststoffmaterial mit selbstschmierenden Eigenschaften. Ein derartiges Gleitlager ist wegen seiner kleinen tragenden Fläche nicht stark belastbar, und die selbstschmierenden Eigenschaften der Kunststoffbeschichtung sind begrenzt.

Aus der GB-A-970 392 ist ein Gleitlager bekannt, das sich aus einem inneren Lagerteil aus Kunststoff und einer äußeren, im wesentlichen zylindrischen Blechbuchse zusammensetzt, in welche axial verlaufende, wellenförmige Vertiefungen eingeprägt sind, die vor den Rändern der Blechbuchse enden. In diese Vertiefungen kann ein Schmiermittel eingefüllt werden, das über Bohrungen in der Blechbuchse und dem inneren Lagerteil an die als Lagerfläche dienende Innenwand des inneren Lagerteils gelangt. Dieses Gleitlager ist in seiner Herstellung sehr aufwendig, und die an der Außenseite der Metallbuchse befindlichen Fettkammern müssen von einer Hülse abgeschlossen werden, die erst beim Einsetzen des Gleitlagers in den Lagerträger entfernt wird.

Der Erfindung liegt die Aufgabe zugrunde, ein sich selbst schmierendes Kunststoffgleitlager zu schaffen, das als Einheit ohne Schwierigkeit in einen Lagerträger einsetzbar ist und das bei hoher Belastbarkeit preiswert in der Herstellung ist.

Diese Aufgabe wird erfindungsgemäß dadurch gelöst, daß zwischen dem äußeren Ringteil und dem inneren Lagerteil mit Fett gefüllte Kammern angeordnet sind, die Kanäle aufweisen, welche zur Innenwand des inneren Lagerteils führen und daß das innere Lagerteil an beiden Seitenrändern dichtend an der Innenwand des äußeren Ringteils anliegende Ringbunde aufweist, zwischen denen die Fettkammern angeordnet sind.

Die Innenwand des inneren Lagerteils ist zur Aufnahme einer zylindrischen Welle oder einer zylindrischen axial verschiebbaren Stange hohlzylindrisch ausgebildet.

Weitere Merkmale der Erfindung ergeben sich aus den Patentansprüchen 2 bis 7.

Zur Aufnahme eines kugelförmigen Teiles wird die oben genannte Aufgabe dadurch gelöst, daß zwischen dem äußeren Ringteil und zwei inneren Lagerteilen mit Fett gefüllte Kammern angeordnet sind, die Kanäle aufweisen, welche zur Innenwand der inneren Lagerteile führen und die Innenwände der inneren Teile jeweils die Hälfte einer in der Mitte axial geteilten Kugelpfanne bilden und jeder innere Teil an den Seitenwänden dichtend an der Innenwand des äußeren Ringteils anliegende Ringbunde aufweist, zwischen denen die Fettkammern angeordnet sind.

Ein derartiges Kunststoffgleitlager dient beispielsweise zur Lagerung eines mit einer Kugel versehenen Schalthebels.

In der folgenden Beschreibung werden Ausführungsbeispiele der Erfindung unter Bezugnahme auf die Zeichnungen näher erläutert. Diese zeigen in

Fig. 1 ein Lenkgetriebe mit Zahnstange, die in einem Kunststoffgleitlager gemäß der Erfindung gelagert ist,

Fig. 2 eine Ansicht nach der Schnittlinie II–II in Fig. 3,

Fig. 3 eine Seitenansicht eines inneren Lagerteils,

Fig. 4 eine Draufsicht eines äußeren Ringteiles,

Fig. 5 eine Ansicht nach der Schnittlinie V–V in Fig. 4,

Fig. 6 eine Draufsicht gemäß Fig. 4 mit eingesetztem inneren Lagerteil,

Fig. 7 eine Schnittansicht gemäß Fig. 5 mit eingesetztem inneren Lagerteil,

Fig. 8 eine Ansicht nach der Schnittlinie VIII–VIII in Fig. 9,

Fig. 9 eine Seitenansicht einer anderen Ausführungsform eines inneren Lagerteils,

Fig. 10 eine Draufsicht auf ein Kunststoffgleitlager,

Fig. 11 eine Schnittansicht des äußeren Ringteils mit eingesetztem inneren Lagerteil,

Fig. 12 eine Draufsicht auf ein Kunststoffgleitlager nach Fig. 10,

Fig. 13 eine Schnittansicht eines Kunststoffgleitlagers, dessen inneres Lagerteil als Kugelpfanne ausgebildet ist zur Lagerung eines Schalthebels.

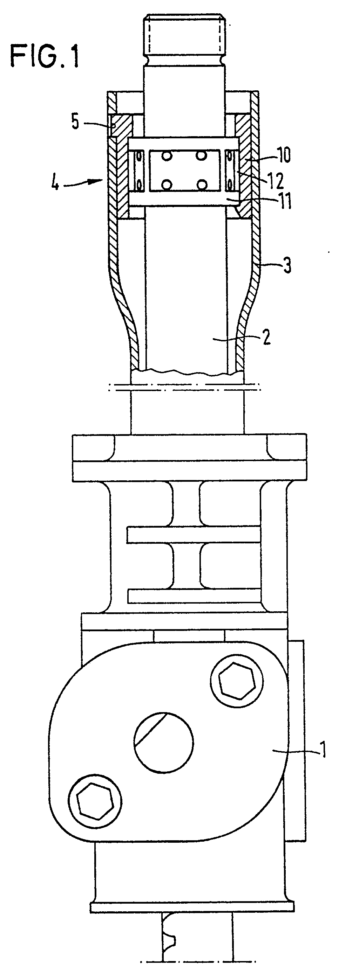

Wie Fig. 1 zeigt, ist eine axial verschiebbare Zahnstange 2 eines Lenkgetriebes 1 über ein Kunststoffgleitlager 4 in einem als Lagerträger 3 dienendes Führungsrohr gelagert. Das Kunststoffgleitlager setzt sich zusammen aus einem äußeren Ringteil 10 und einem inneren Lagerteil 11. Zwischen dem äußeren Ringteil 10 und dem inneren Lagerteil 11 sind Fettkammern 12 angeordnet. Das Kunststoffgleitlager 4 ist über federnde Rasten 5, die am äußeren Ringteil 10 angeordnet sind, im Führungsrohr 3 gehalten.

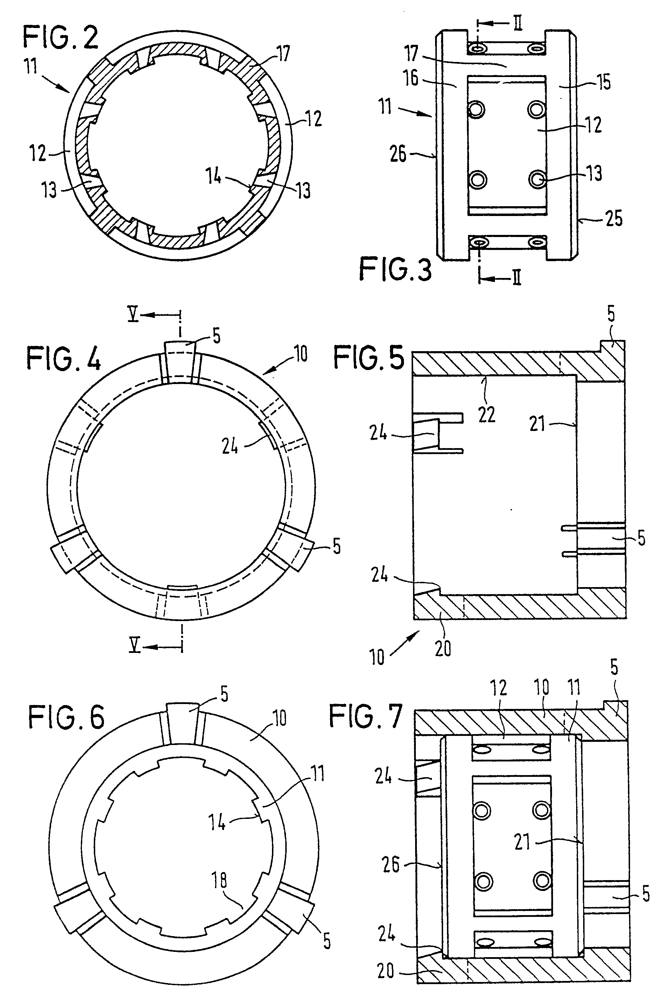

Wie die Fig. 2 und 3 zeigen, sind im inneren Lagerteil 11 wannenförmige Ausnehmungen 12 vorgesehen, die nach Einsetzen des inneren Lagerteils 11 in den äußeren Ringteil 10 Fettkammern bilden, die über Kanäle 13 mit der Innenwand 14 des inneren Lagerteils 11 verbunden sind. An dieser Innenwand 14 gleitet die zu lagernde, zylindrische Welle oder Stange. Das innere Lagerteil 11 weist an beiden Seitenrändern Ringbunde 15 und 16 auf, deren Umfangsflächen dichtend an die Innenwand 22 des äußeren Ringteils 10 zur Anlage kommt. Die zwischen den Ringbunden 15 und 16 befindlichen Fettkammern 12 sind durch axial verlaufende Stege 17 voneinander getrennt. Auf dem Umfang sollten mindestens drei derartiger Stege 17 angeordnet sein, damit verhindert wird, daß das Fett bei Erwärmung aus dem oberen Bereich des Lagers in den unteren Bereich des Lagers läuft.

Wie die Fig. 5 und 7 zeigen, ist im äußeren Ringteil 11 ein Anschlagbund 21 für einen Rand 25 des Lagerteils 10 vorgesehen. Im Abstand von diesem Anschlagbund 21 sind mindestens drei über den Umfang in gleichen Abständen verteilte federnde Rasten 20 vorgesehen, deren Rastvorsprünge 24 über den anderen Rand 26 des inneren Lagerteils greifen.

Wie die Fig. 6 zeigt, ist die das zu lagernde Teil aufnehmende Innenwand 14 durch axial verlaufende Ausnehmungen 18 unterteilt.

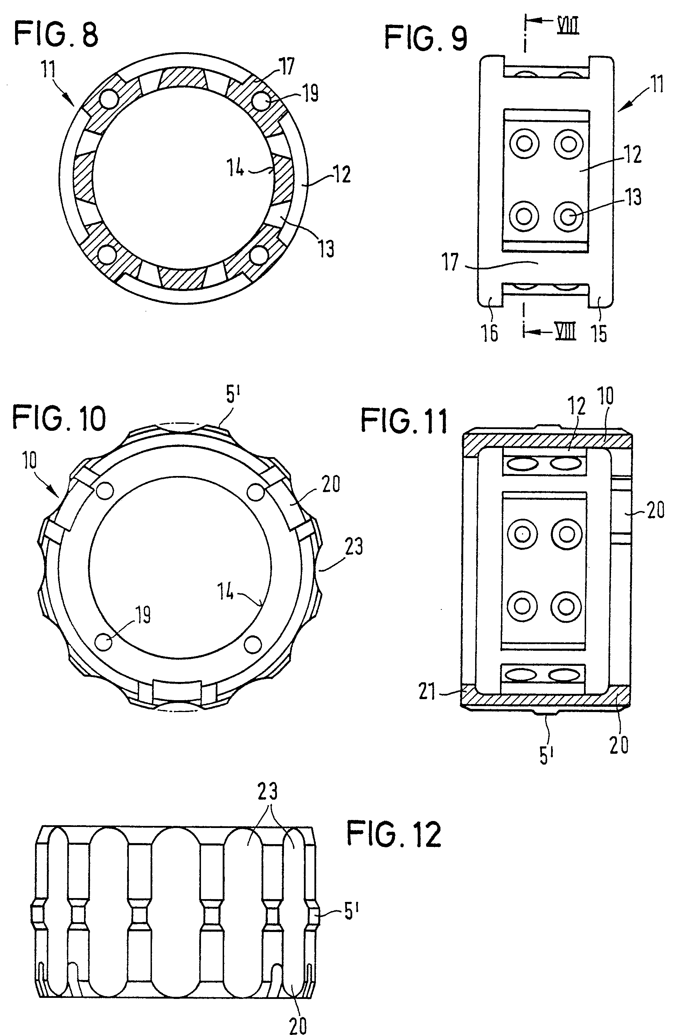

Bei dem Kunststoffgleitlager nach den Fig. 8 bis 12 sind im Bereich der Stege 17 von einer Seite des Lagers zur anderen Seite des Lagers durchgehende Luftkanäle 19 angeordnet. Diese Luftkanäle bewirken eine Belüftung durch das Kunststoffgleitlager hindurch.

Wie die Fig. 10, 11 und 12 zeigen, sind am Umfang des äußeren Ringteils 10 im mittleren Bereich federnde Rasten 5' angeordnet. Diese Rasten sind in eine Ringnut des Lagerträgers einrastbar. Dadurch, daß diese Rasten 5' im Bereich über den Fettkammern 12 angeordnet sind, sind sie auch ausreichend federnd.

Am Umfang des äußeren Ringteils 10 sind in regelmäßigen Abständen axial verlaufende muldenförmige Luftkanäle 23 angeordnet.

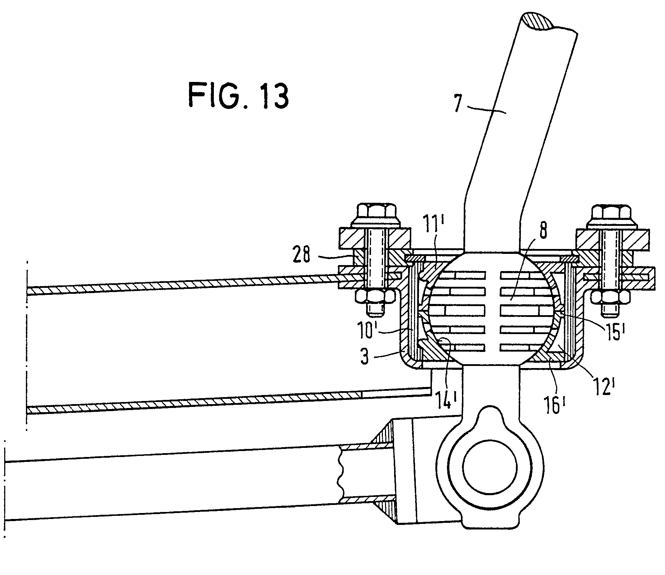

Das in Fig. 13 dargestellte Ausführungsbeispiel zeigt ein Kunststoffgleitlager, das zur Lagerung eines mit einer Kugel 8 versehenen Schalthebels 7 dient. Das innere Lagerteil 11' ist in der axialen Mitte geteilt und die Innenwände 14' dieser Hälften sind als Kugelpfannen ausgebildet. Jede Hälfte des inneren Lagerteils 11' weist an den Seitenrändern dichtend an der Innenwand des äußeren Ringteils anliegende Ringbunde 15', 16' auf. Zwischen diesen Ringbunden 15', 16' sind die Fettkammern 12' angeordnet.

Das Kunststoffgleitlager wird von einem Fixierring 28, der auf einem Flansch des Lagerträgers aufgeschraubt ist, im Lagerträger gehalten. Der Schalthebel 7 wird zusammen mit dem Kunststoffgleitlager in den Lagerträger 3 eingeschoben und danach der Fixierring 28 aufgeschraubt.

Bezugszeichenliste
1 Lenkgetriebe
2 Zahnstange, Stange
3 Führungsrohr, Lagerträger
4 Kunststoffgleitlager
5 Rasten
5' Rasten
7 Schalthebel
8 Kugeln
9
10 äußerer Ringteil
11 innerer Ringteil
12 Fettkammern
13 Kanäle
14 Innenwand
15 Ringbund
16 Ringbund
17 Steg
18 Ausnehmung
19 Luftkanäle
20 Rasten
21 Anschlagbund
22 Innenwand
23 Luftkanäle
24 Rastvorsprünge
25 Rand
26 Rand
27 Innenwand
28 Fixierring

## Patentansprüche

1. Kunststoffgleitlager, das als Einheit in einen hohlzylindrischen Lagerträger (3) einsetzbar und dort fixierbar ist und aus einem äußeren Ringteil (10) und einem in den äußeren Ringteil (10) koaxial eingesetzten inneren Lagerteil (11) zusammengesetzt ist und der äußere Ring und der innere Lagerteil (11) über federnde Rasten (20) miteinander verriegelt sind, dadurch gekennzeichnet, daß zwischen dem äußeren Ringteil (10) und dem inneren Lagerteil (11) mit Fett gefüllte Kammern (12) angeordnet sind, die Kanäle (13) aufweisen, welche zur Innenwand (14) des inneren Lagerteils (11) führen und daß das innere Lagerteil (11) an beiden Seitenrändern dichtend an der Innenwand (2) des äußeren Ringteils (10) anliegende Ringbunde (15, 16) aufweist, zwischen denen die Fettkammern (12) angeordnet sind.

2. Kunststoffgleitlager nach Anspruch 1, insbesondere zur Lagerung einer axial verschiebbaren Zahnstange (2) in einem Führungsrohr eines Lenkgetriebes, dadurch gekennzeichnet, daß der äußere Ringteil (10) federnde Rasten (5) zur Fixierung des Lagers im Lagerträger (3) aufweist und die Innenwand (14) des inneren Lagerteils (11) hohlzylindrisch ist.

3. Kunststoffgleitlager nach Anspruch 1 oder 2, dadurch gekennzeichnet, daß der zwischen den Ringbunden (15, 16) befindliche Ringraum durch mindestens drei im wesentlichen parallel zur Achse des Lagers verlaufende Stege (17), deren Außenfläche bündig ist mit der Umfangsfläche der Ringbunde (15, 16), in Fettkammern (12) unterteilt ist.

4. Kunststoffgleitlager nach Anspruch 3, dadurch gekennzeichnet, daß im inneren Lagerteil (11) im Bereich der Stege (17) von einer Seite des Lagers zur anderen Seite des Lagers durchgehende Luftkanäle (19) angeordnet sind.

5. Kunststoffgleitlager nach einem der Ansprüche 1 bis 4, dadurch gekennzeichnet, daß der äußere Ringteil (10) im Inneren einen Anschlagbund (21) für den einen Rand (25) des Lagerteils (11) und im Abstand von diesem Anschlagbund (21) mindestens drei über den Umfang in gleichen Abständen verteilte federnde Rasten (20) mit über den anderen Rand (26) des inneren Lagerteils (11) greifenden Rastvorsprüngen (24) aufweist.

6. Kunststoffgleitlager nach einem der Ansprüche 1 bis 5, dadurch gekennzeichnet, daß am Umfang des äußeren Ringteils (10), im mittleren, die Kammern (12) überdeckenden Bereich, federnde, in eine Ringnut einrastbare Rasten (5') angeordnet sind.

7. Kunststoffgleitlager nach einem der Ansprüche 1 bis 6, dadurch gekennzeichnet, daß am Umfang des äußeren Ringteils (10) in regelmäßigen Abständen axial verlaufende, muldenförmige Luftkanäle (23) angeordnet sind.

8. Kunststoffgleitlager, das als Einheit in einen hohlzylindrischen Lagerträger (3) einsetzbar und dort fixierbar ist und aus einem äußeren Ringteil (10) und mindestens einem in den äußeren Ringteil (10) koaxial eingesetzten inneren Lagerteil (11') zusammengesetzt ist und die äußeren und inneren Teile über federnde Rasten (20) miteinander verriegelt sind, dadurch gekennzeichnet, daß zwischen dem äußeren Ringteil (10) und zwei inneren Lagerteilen (11') mit Fett gefüllte Kammern (12') angeordnet sind, die Kanäle aufweisen, welche zur Innenwand (14) der inneren Lagerteile führen und die Innenwände (14') der inneren Teile (11') jeweils die Hälfte einer in der Mitte axial geteilten Kugelpfanne bilden und jeder innere Teil (11') an den Seitenwänden dichtend an der Innenwand des äußeren Ringteils (10) anliegende Ringbunde (15', 16') aufweist, zwischen denen die Fettkammern angeordnet sind.

## Claims

1. A plastics plain bearing which can be fitted as a unit into a hollow cylindrical bearing carrier (3) and fixed therein and which is composed of an outer ring portion (10) and an inner bearing portion (11) which is coaxially fitted into the outer ring portion (10), and the outer ring and the inner bearing portion (11) are locked together by way of resilient retainers (20), characterised in that arranged between the outer ring portion (10) and the inner bearing portion (11) are grease-filled chambers (12) having passages (13) which lead to the inner wall surface (14) of the inner bearing portion (11) and that at both side edges the inner bearing portion (11) has annular shoulders (15, 16) which bear sealingly against the inner wall surface (2) of the outer ring portion (10) and between which the grease chambers (12) are arranged.

2. A plastics plain bearing according to claim 1, in particular for mounting an axially slidable rack (2) in a guide tube of a steering mechanism, characterised in that the outer ring portion (10) has resilient retainers (5) for fixing the bearing in the bearing carrier (3) and the inner wall surface (14) of the inner bearing portion (11) is hollow-cylindrical.

3. A plastics plain bearing according to claim 1 or claim 2, characterised in that the annular space between the annular shoulders (15, 16) is subdivided into grease chambers (12) by at least three web portions (17) which extend substantially parallel to the axis of the bearing and the outer surfaces of which are flush with the peripheral surface of the annular shoulders (15, 16).

4. A plastics plain bearing according to claim 3, characterised in that disposed in the inner bearing portion (11) in the region of the web (17) are air passages (19) which extend through the bearing from one side thereof to the other.

5. A plastics plain bearing according to one of claims 1 to 4, characterised in that the outer ring portion (10) is provided in its interior with an abutment shoulder (21) for the one edge (25) of the bearing portion (11) and at a spacing from said abutment shoulder (21) it has at least three resilient retainers (20) which are distributed at uniform spacings over the periphery of the portion, with retaining projections (24) which engage over the other edge (26) of the inner bearing portion (11).

6. A plastics plain bearing according to one of claims 1 to 5, characterised in that arranged at the periphery of the outer ring portion (10) in the middle region which extends over the chambers (12) are resilient retainers (5') which can engage into an annular groove.

7. A plastics plain bearing according to one of claims 1 to 6, characterised in that disposed at the periphery of the outer ring portion (10) are trough-shaped air passages (23) which extend axially at regular spacings.

8. A plastics plain bearing which can be fitted as a unit into a hollow cylindrical bearing carrier (3) and fixed therein and which is composed of an outer ring portion (10) and at least one inner bearing portion (11') which is coaxially fitted into the outer ring portion (10), and the outer and inner portions are locked together by way of resilient retainers (20), characterised in that arranged between the outer ring portion (10) and two inner bearing portions (11') are grease-filled chambers (12') having passages which lead to the inner wall surface (14) of the inner bearing portions and the inner wall surfaces (14') of the inner portions (11') each form a respective half of a ball socket which is axially divided at the centre and at the side walls each inner portion (11') has annular shoulders (15', 16') which bear sealingly against the inner wall surface of the outer ring portion (10) and between which the grease chambers are arranged.

## Revendications

1. Palier à contact lisse en matière plastique pouvant être installé en tant qu'unité dans un support de palier (3) en forme de cylindre creux et y être fixé et composé d'un anneau externe (10) et d'un coussinet interne (11) logé de façon coaxiale dans l'anneau externe (10), l'anneau externe (10) et le coussinet interne (11) étant assemblés par des taquets de verrouillage élastiques (20), caractérisé en ce que entre l'anneau externe (10) et le coussinet interne (11) sont disposées des chambres (12) remplies de lubrifiant, desquelles partend des conduits (13) menant à la paroi intérieure (14) du coussinet (11), et en ce que le coussinet intérieur (11) présente, sur les deux bords latéraux, des collerettes (15, 16) plaquées de façon étanche contre la paroi intérieure (2) de l'anneau externe (10), et entre lesquelles sont disposées les chambres de lubrification (12).

2. Palier à contact lisse en matière plastique, selon la revendication 1, en particulier pour loger une tige de crémaillère (2) à déplacement axial, dans un tube guide d'un mécanisme de direction, caractérisé en ce que l'anneau externe (10) présente des taquets élastiques (5) pour la fixation du palier dans le support de palier (3), et en ce que la paroi intérieure (14) du coussinet interne (11) a la forme d'un cylindre creux.

3. Palier à contact lisse en matière plastique, selon la revendication 1 ou 2, caractérisé en ce que l'espace annulaire qui se trouve entre les collerettes (15, 16) est divisé en chambres de lubrification par au moins trois entretoises (17) essentiellement parallèles à l'axe du coussinet et dont la surface extérieure affleure la surface périphérique des collerettes (15, 16).

4. Palier à contact lisse en matière plastique, selon la revendication 3, caractérisé en ce que le coussinet (11) est pourvu, au niveau des entretoises (17), de conduits d'air (19) qui traversent le palier de bout en bout.

5. Palier à contact lisse en matière plastique, selon l'une des revendications 1 à 4, caractérisé en ce que l'anneau externe (10) présente, à l'intérieur, un épaulement (21) contre lequel vient en butée le bord (25) du coussinet interne (11), et, à distance de cet épaulement (21), au moins trois taquets élastiques (20), répartis régulièrement sur la périphérie, avec des ressauts (24) qui viennent se loger au dessus de l'autre bord (26) du coussinet interne (11).

6. Palier à contact lisse en matière plastique, selon l'une des revendications 1 à 5, caractérisé en ce que des taquets élastiques (5'), encliquetables dans une rainure annulaire, sont prévus sur la périphérie de l'anneau externe (10), au milieu de la partie recouvrant les chambres (12).

7. Palier à contact lisse en matière plastique, selon l'une des revendications 1 à 6, caractérisé en ce que des conduits d'air (23) en forme d'auge sont disposés axialement à des intervalles réguliers sur la périphérie du coussinet externe (10).

8. Palier à contact lisse en matière plastique pouvant être installé en tant qu'unité dans un support de palier (3) en forme de cylindre creux et y être fixé, composé d'un anneau externe (10) et d'au moins un coussinet interne logé de façon coaxiale dans l'anneau externe (10), les pièces internes et externes étant assemblées par des taquets de verrouillage élastiques (20), caractérisé en ce qu'entre l'anneau externe (10) et deux coussinets internes (11') sont disposées des chambres (12') remplies de lubrifiant, desquelles partent des conduits menant à la paroi intérieure (14) du coussinet interne, et en ce que les parois intérieures (14) des pièces internes (11') forment chacune la moitié d'un coussinet sphérique divisé axialement en son milieu, et en ce que chaque pièce interne (11') présente, sur les parois latérales, des collerettes (15', 16') plaquées de façon étanche contre la paroi intérieure de l'anneau externe (10), et entre lesquelles sont disposées les chambres de lubrification.

FIG.1

5

4

10

12

11

3

2

1

FIG.2

FIG.3

FIG.4

FIG.5

FIG.6

FIG.7

FIG. 8

FIG. 9

FIG. 10

FIG. 11

FIG. 12

11

EP 0 168 663 B1

FIG. 13

7

28

11'

8

10'

3

15'

14'

16'

12'

13